# FASCICULE DE BREVET EUROPEEN

(11) **EP 1 785 666 B1**
(45) Date de publication et mention de la délivrance du brevet: **14.07.2010**
(21) Numéro de dépôt: 06291715.8
(22) Date de dépôt: 06.11.2006
(51) Int. Cl.: F21S 8/10

(54) **Module optique avec lampe ville pour véhicule automobile**
Kfz-optisches Modul mit einem Standlicht
Optical module with a position lamp for a motor vehicle

(30) Priorité: 10.11.2005 FR 0511487
(43) Date de publication de la demande: 16.05.2007
(73) Titulaire: VALEO VISION, 93012 Bobigny Cedex (FR)
(72) Inventeur: Certain, Stéphan, 49100 Angers (FR)
(74) Mandataire: Tran, Chi-Hai

(56) Documents cités:
- EP-A- 1 291 240
- EP-A- 1 547 861
- DE-A1- 19 627 936
- DE-A1- 19 652 569
- FR-A- 2 675 092

## Description

L'invention est relative à un module optique pour véhicule automobile, comportant un réflecteur présentant un axe optique, une source lumineuse principale placée au voisinage du foyer du réflecteur, lequel est prévu pour donner un faisceau principal à partir de ladite source lumineuse principale, et une lampe ville, par exemple située au-dessous du plan horizontal passant par l'axe optique. On comprend par « lampe ville » une lampe destinée à remplir plutôt une fonction de signalisation, de type lampe ville, qu'une fonction d'éclairage, sans cependant l'exclure. Cette lampe remplit une fonction photométrique différente, dite fonction « secondaire », de celle remplie par la source lumineuse principale dite « fonction principale »..

L'invention concerne un module optique à coupure, de type code /coupure de type oblique ou anti-brouillard /coupure plate, ou sans coupure, de type route.

Dans les projecteurs du genre en question, le réflecteur est conçu pour optimiser le faisceau principal provenant de la source lumineuse principale. Comme le réflecteur n'est pas spécialement adapté à la lampe ville, le faisceau lumineux ville issu du module optique sera souvent insuffisant pour satisfaire aux normes en vigueur; en particulier, une zone située sous un angle d'environ 10° au-dessous de l'axe optique est généralement insuffisamment éclairée.

Une solution consisterait à implanter un réflecteur additionnel dédié à la lampe ville. Cette solution entraînerait une augmentation de l'encombrement du module optique et du coût de production. L'aspect extérieur en serait affecté.

Il est connu du document DE 196 52 569 un réflecteur muni d'aménagements latéraux afin d'élargir le faisceau lumineux d'une lampe de position située au dessous du plan horizontal passant par l'axe optique.

Il est connu du document DE 196 27 936 un réflecteur muni de deux lampes, le faisceau issu de l'une d'entre elles étant dévié par des moyens optiques n'appartenant pas au réflecteur.

Il est connu du document EP 1 291 240 un réflecteur muni de zones de niveaux de réflexion différents.

Il est connu du document EP 1 547 861 un réflecteur principal auquel on adjoint un réflecteur additionnel annulaire.

Il est connu du document FR 2 675 092 un réflecteur muni d'au moins un segment à facettes.

L'invention a pour but, surtout, de fournir un module optique du genre défini précédemment qui permet d'obtenir avec la lampe ville un faisceau lumineux satisfaisant aux exigences réglementaires, de manière simple et économique, sans affecter l'aspect extérieur du projecteur.

Selon l'invention, l'invention a pour objet un module optique pour véhicule automobile, comportant un réflecteur présentant un axe optique, une source lumineuse principale placée au voisinage du foyer du réflecteur, lequel réflecteur est prévu pour donner un faisceau principal à partir de la source lumineuse principale et une lampe secondaire, notamment une lampe ville située au-dessous du plan horizontal passant par l'axe optique. Ce module comporte une collerette comprenant au moins une facette, notamment des facettes de réflexion, notamment disposées au-dessus de la lampe secondaire, notamment de type lampe ville, la ou au moins une des facettes de réflexion, notamment chaque facette de réflexion, étant prévue et orientée pour réfléchir une partie du flux lumineux émis par la lampe secondaire suivant une direction privilégiée formant un angle α avec l'axe optique du réflecteur.

On comprend par module optique un ensemble optique, qui peut générer un ou plusieurs faisceaux lumineux et qui est destiné à être intégré dans un projecteur de véhicule automobile, un projecteur étant muni de un ou plusieurs modules optiques.

De préférence, la collerette est disposée en partie haute du réflecteur, par exemple au voisinage de son bord supérieur. Avec cette configuration, on peut rediriger de la lumière selon une direction descendante (par rapport à l'horizontale ou par rapport à l'axe du réflecteur). Une autre variante consiste à localiser la collerette en partie basse du réflecteur, par exemple au voisinage de son bord inférieur. Avec cette autre configuration, on peut rediriger la lumière selon une direction montante (par rapport à l'horizontale ou par rapport à l'axe du réflecteur), ce qui présente notamment de l'intérêt quand la fonction secondaire, notamment de type lampe de ville, est gênée/occultée par la présence d'un masque en partie haute.

Une disposition latérale de la collerette par rapport au réflecteur est également possible (éventuellement se prolongeant en partie haute ou basse). L'axe optique du réflecteur correspond ou non à l'axe longitudinal du véhicule. axe optique : Il peut être effectivement être confondu, ou, par exemple, être un peu incliné dans un plan substantiellement vertical et/ou horizontal par rapport à l'axe longitudinal du véhicule. Par exemple, quand le faisceau principal est de type anti-brouillard, son axe optique peut être légèrement incliné, de 0.5 à 2° verticalement, et de 0 à 15°, notamment de 5 à 10°, horizontalement.

Avantageusement, la ou chaque facette présente une surface dont la section par un plan parallèle à l'axe optique et passant par le centre de la facette et le centre de la lampe secondaire est un arc de parabole dont le foyer est situé au voisinage du centre de la lampe ville, l'axe de la parabole étant incliné suivant ladite direction privilégiée.

La surface de chaque facette peut être celle d'un tore ayant pour support ladite parabole.

L'angle d'inclinaison sur l'horizontale de la direction descendante est avantageusement d'au moins 5°, notamment compris entre 5 et 20° ou entre 8 et 15°, par exemple d'environ 10°. Cet angle est de préférence d'au plus 30°, notamment d'au plus 20°.

La collerette peut comporter au moins une, notamment plus d'une dizaine de facettes disposées de manière contiguë, en décrochements successifs.

La collerette et le réflecteur peuvent former une pièce monobloc ou, en variante, la collerette peut être rapportée sur le réflecteur.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue schématique en coupe suivant la ligne I-I de Fig.3 d'un module optique selon l'invention.
Fig. 2 est une représentation schématique en perspective, à plus grande échelle, d'une partie du module optique vu d'un point plus bas que le module optique et sensiblement de trois quarts avant.
Fig. 3 est une vue de face, avec parties arrachées, du module optique de Fig. 1 prévu pour montage côté droit d'un véhicule.
Fig.4 est une vue de côté, avec parties arrachées, du module optique de Fig. 1.
Fig. 5 est un schéma comparatif de courbes isolux d'un module optique selon l'invention et d'un module optique classique, et
Fig. 6 est un schéma illustrant l'apport de la collerette en termes de flux lumineux.

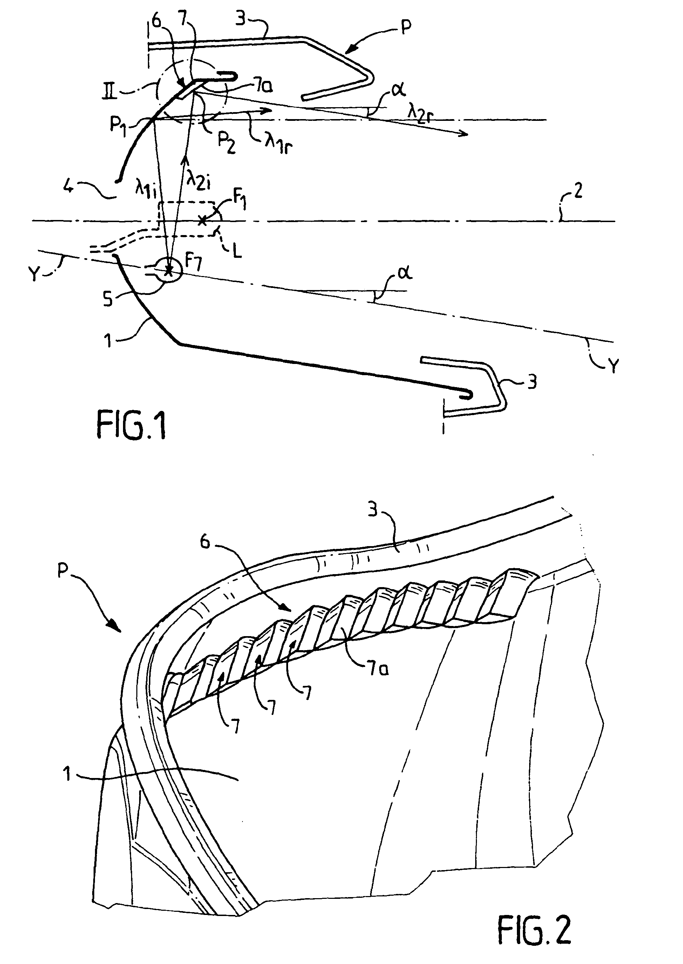

En se référant à Fig. 1 à 4, on peut voir un module optique P qui comporte un réflecteur 1, à surface complexe de forme parabolique et de foyer F1. Le réflecteur 1 admet un axe optique 2, sensiblement horizontal lorsque le module optique est monté dans un véhicule. Un masque 3 en matière plastique protège le contour du réflecteur 1.

Le module optique représenté sur les Fig. 1 à 4 est destiné à être monté du côté droit d'un véhicule. Par symétrie, les explications données ci-après peuvent être transposées à un module optique gauche.

Une ouverture 4 est prévue dans la zone centrale du réflecteur pour le montage d'une lampe code L dont le point d'émission maximal est situé au foyer F1 ou à son voisinage. Cette lampe L sert de source lumineuse principale pour le module optique P et est dédiée à la production du faisceau lumineux code. La surface complexe du module optique comporte des bandes séparées par des stries M, déterminées pour donner un faisceau à coupure.

Une lampe ville 5 est disposée dans la partie du réflecteur 1 située au-dessous de l'axe optique 2. Cette lampe 5 est dédiée au faisceau ville.

En variante, le réflecteur 1 pourrait être celui d'un module optique route dans lequel serait installée la lampe ville.

Selon l'invention, une collerette 6 de facettes de réflexion 7a est prévue au-dessus de la lampe ville 5. La collerette 6 est disposée de préférence au voisinage du bord supérieur du réflecteur 1, dans une zone opposée à la lampe ville 5, et s'étend le long d'une partie de ce bord supérieur.

Comme visible sur Fig. 2, les facettes 7a constituent les faces avant d'éléments sensiblement prismatiques 7, juxtaposés bord à bord, en décrochements successifs. La collerette 6 peut comporter plus d'une dizaine d'éléments 7, notamment une vingtaine.

Avantageusement la section d'une facette 7a par un plan parallèle à l'axe optique 2 et passant par le centre de la facette et le centre de la lampe ville 5, est un arc de parabole de foyer F7 et d'axe Y-Y incliné sur l'horizontale vers le bas d'un angle α, de préférence de 10°. La surface de chaque facette 7a peut être celle d'un tore ayant pour support ladite parabole. La section d'une facette 7a par un plan horizontal est de préférence un arc de courbe convexe vers l'avant pour ouvrir l'angle du faisceau réfléchi. Les foyers F7 de tous les éléments 7 sont confondus avec le centre de la lampe de ville 5, ou voisins de ce centre.

Les facettes 7a ont une longueur d'environ 6 mm suivant leur section en arc de parabole, et une épaisseur d'environ 2 à 3 mm suivant une direction sensiblement orthogonale à la zone voisine du réflecteur 1. La collerette 6 s'arrête au niveau des stries M du réflecteur 1 pour ne pas altérer les performances en portée, ni la ligne de coupure à 15° dans le cas d'un code.

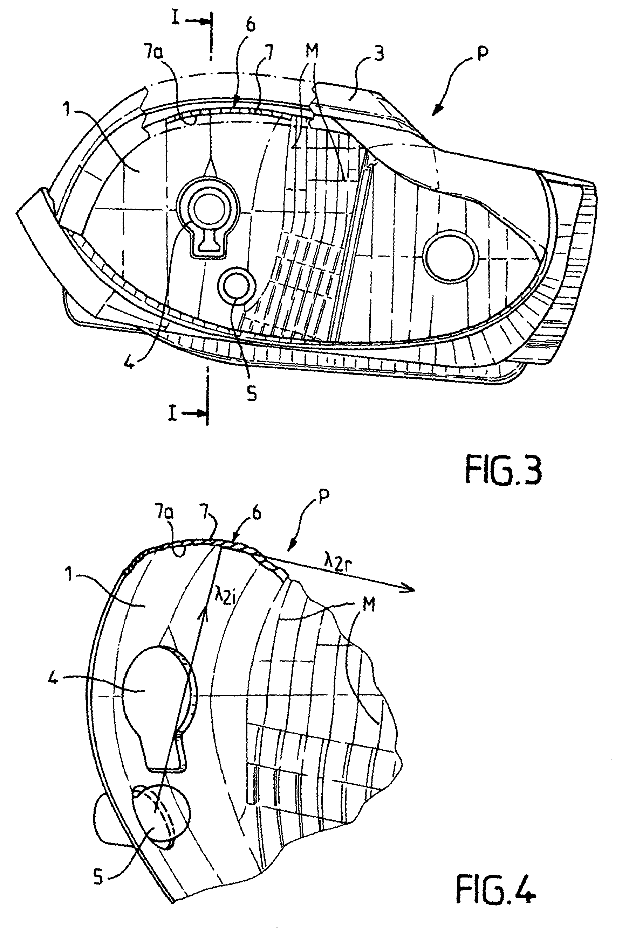

Le module optique P représenté sur Fig.3 comporte, à droite des stries M, une autre cavité avec un autre réflecteur et une autre source lumineuse pour produire un faisceau route.

Le masque 3 a été arraché partiellement sur Fig.3 pour laisser apparaître la collerette 6. Les contours supérieur et inférieur du masque sont représentés en trait mixte dans la zone de l'arrachement, et la collerette 6 se trouve comprise verticalement entre ces contours. Dans ces conditions, lorsque le module optique P est vu de face, la collerette 6 n'est pas visible et le style du module optique n'est pas altéré.

Le fonctionnement du module optique pour l'éclairage ville est le suivant.

Un rayon λ1i (Fig.1) issu de la lampe ville 5 atteint le réflecteur 1 en un point P1 situé plus bas que la collerette 6. Ce rayon λ1i est réfléchi vers l'avant suivant un rayon λ1r qui contribue à la formation du faisceau ville.

Un rayon incident λ2i frappe la collerette 6 en un point P2 d'une facette 7a. En l'absence de la collerette 6, un tel rayon serait réfléchi suivant une direction trop relevée qui ne permettrait pas d'obtenir un faisceau ville satisfaisant. Grâce à la collerette 6 de l'invention, le rayon λ2i est réfléchi vers l'avant par la facette 7a, suivant un rayon λ2r parallèle à l'axe Y-Y de la parabole, en étant incliné vers le bas suivant l'angle α = 10°. Les rayons réfléchis semblables à λ2i passent sous le bord du masque 3 pour compléter le faisceau ville dans une zone insuffisamment éclairée.

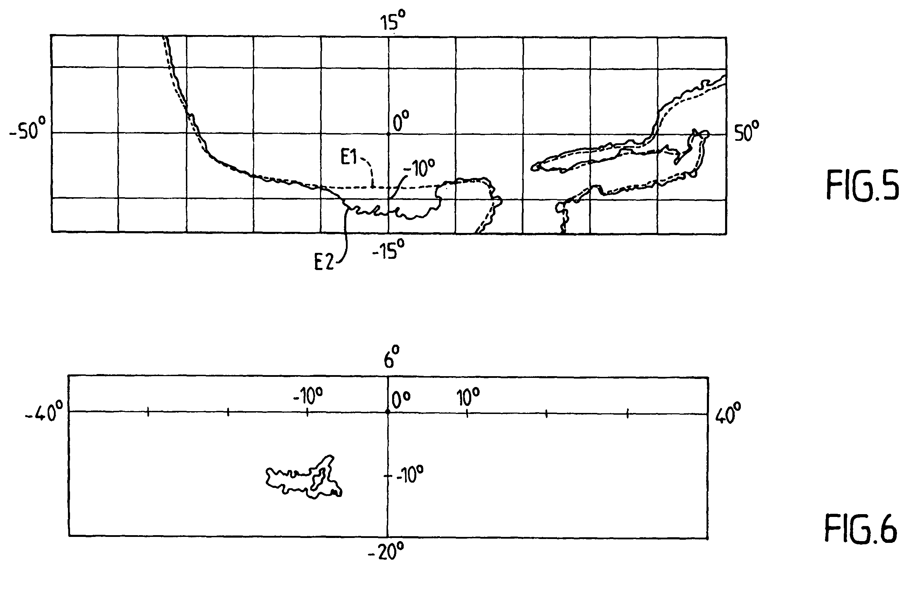

Fig.5 illustre ce résultat de manière simplifiée avec des courbes isolux E1, E2 correspondant à un même niveau d'éclairement obtenu sur un écran orthogonal à l'axe optique, à distance déterminée (25m généralement) du module optique P. Il s'agit ici d'un résultat obtenu avec une lampe ville de type W5W, prenant en compte à la fois la lumière émise par cette lampe vers le réflecteur et vers la collerette. La courbe en tirets E1 correspond à un module optique classique ; la courbe en trait plein E2 correspond à un module optique selon l'invention, toutes choses égales par ailleurs. La zone située au-dessus des courbes E1, E2 correspond à un éclairement ayant une valeur supérieure à celle de la courbe, et la zone située au-dessous des courbes E1, E2 correspond à un éclairement ayant une valeur inférieure à celle de la courbe. Suivant la direction de l'axe optique (0° en abscisse) la courbe E1 passe au-dessus de la graduation -10° en ordonnée. Ceci indique que la zone de l'écran correspondant à une direction descendante de 10° par rapport à l'horizontale bénéficie d'un éclairement inférieur à celui de la courbe E1. Par contre la courbe E2 passe au-dessous de la zone entourant le point de coordonnées (0°, -10°), ce qui montre l'amélioration de l'éclairement de cette zone.

Fig.6 illustre la tache d'éclairement due à la seule collerette 6. La partie centrale la plus éclairée de cette tache a une ordonnée d'environ -10° et une abscisse d'environ -10°, sur la gauche de l'axe optique. Il s'agit d'un résultat obtenu en prenant en compte la collerette seule comme surface réfléchissante, avec une lampe de type H7 pour assurer la fonction code. Elle permet de vérifier que la collerette ne perturbe pas la performance de la fonction code, et qu'elle n'amène substantiellement pas de lumière parasite à cette fonction.

L'invention permet d'augmenter l'éclairement en partie basse et de respecter la grille réglementaire qui exige une valeur minimale pour l'éclairement dans l'axe à 10° vers le bas. Ce résultat est obtenu sans dégrader les performances du faisceau principal du module optique (code dans l'exemple décrit), car l'influence de la collerette 6 sur ce faisceau principal est quasiment nulle.

Chaque rayon pour l'éclairage ville ne subit qu'une seule réflexion, ce qui permet de diminuer l'influence des rayons parasites par rapport aux solutions mettant en oeuvre une première réflexion sur un réflecteur principal et une seconde réflexion sur un réflecteur additionnel. Par ailleurs dans le cas d'une double réflexion, les réflexions dans le réflecteur code ne sont pas maîtrisées. Dans un module optique P selon l'invention, les facettes 7a de la collerette 6 sont orientées et calculées spécifiquement pour l'éclairage ville et pour le respect des normes en vigueur.

La forme convexe de la section des facettes 7a par un plan horizontal permet d'ouvrir l'angle du faisceau lumineux issu de la collerette.

L'impact sur l'esthétique du module optique P est quasiment nul car la collerette 6 est cachée par le bord du masque 3 aux yeux d'un observateur placé sur un sol horizontal en face du module optique P. La collerette ne se laisse deviner qu'en cas de rupture de pente suffisante entre la surface portant le véhicule et celle où se trouve l'observateur.

La collerette 6 peut être partie intégrante du réflecteur 1 et obtenue directement lors de la fabrication du réflecteur. En variante, la collerette 6 peut être une pièce rapportée rendue solidaire du réflecteur. La mise en place de la collerette 6 s'effectue rapidement.

En variante, les facettes de réflexion 7a pourraient être planes. Les facettes 7a seraient disposées de manière que les rayons réfléchis soient inclinés vers le bas sensiblement de 10° par rapport à l'horizontale.

La description a été effectuée à propos d'une collerette 6 située sur le bord supérieur du réflecteur 1. En variante, la collerette 6, tout en demeurant au-dessus de la lampe ville, pourrait être située autour de l'occulteur de la lampe code L.

## Revendications

1. Module optique pour véhicule automobile, comportant un réflecteur (1) présentant un axe optique (2), une source lumineuse principale placée au voisinage du foyer (F1) du réflecteur (1), lequel réflecteur (1) est prévu pour donner un faisceau principal à partir de la source lumineuse principale et une lampe ville (5) située au-dessous du plan horizontal passant par l'axe optique (2), **caractérisé en ce qu'**il comporte une collerette (6) comprenant au moins une facette, notamment des facettes, (7a) de réflexion, la ou au moins une des facettes de réflexion, notamment chaque facette (7a) de réflexion, étant prévue et orientée pour réfléchir une partie du flux lumineux émis par la lampe ville (5) suivant une direction privilégiée formant un angle (α) avec l'axe optique (2) du réflecteur (1), et **en ce que** la collerette (6) est disposée en partie haute du réflecteur (1) ou en partie basse du réflecteur (1).

2. Module optique selon la revendication 1, **caractérisé en ce que** chaque facette (7a) présente une surface dont la section par un plan parallèle à l'axe optique et passant par le centre de la facette et le centre de la lampe ville (5) est un arc de parabole dont le foyer (F7) est situé au voisinage du centre de la lampe ville (5), l'axe (Y-Y) de la parabole étant incliné suivant ladite direction privilégiée.

3. Module optique selon la revendication 2, **caractérisé en ce que** la surface de chaque facette (7a) est celle d'un tore ayant pour support ladite parabole.

4. Module optique selon l'une quelconque des revendications précédentes, **caractérisé en ce que** l'angle d'inclinaison (α) de la direction privilégiée par rapport à l'axe optique est d'au moins 5°, notamment compris entre 5 et 20° ou entre 8 et 15°.

5. Module optique selon l'une quelconque des revendications précédentes, **caractérisé en ce que** la collerette (6) comporte au moins une dizaine de facettes (7a) disposées de manière contiguë, en décrochement successifs.

6. Module optique selon l'une quelconque des revendications précédentes, **caractérisé en ce que** la collerette (6) et le réflecteur (1) forment une pièce monobloc ou **en ce que** la collerette (6) est rapportée sur le réflecteur (1).

7. Module optique selon l'une quelconque des revendications précédentes donnant un faisceau principal à coupure, notamment un faisceau code ou anti-brouillard, ou sans coupure, notamment un faisceau route.

8. Module optique selon l'une quelconque des revendications précédentes, **caractérisé en ce que** la ou chaque facette (7a) de réflexion est prévue et orientée pour réfléchir une partie du flux lumineux émis par la lampe secondaire, notamment la lampe ville (5), suivant une direction montante ou descendante par rapport à l'horizontale.

9. Projecteur comprenant un module optique selon l'une quelconque des revendications précédentes.

## Claims

1. Optical module for a motor vehicle with a reflector (1) having an optical axis (2), a principal light source placed in the vicinity of the focus (F1) of the reflector (1), said reflector (1) being designed to provide a principal beam issuing from the principal light source and a city lamp (5) situated below the horizontal plane passing via the optical axis (2), **characterized in that** it comprises a collar (6) including at least one reflection face, in particular refection faces (7a), the or at least one of the reflection faces, in particular each reflection face (7a), being predicted and oriented for reflecting a part of the luminous flow emitted by the city lamp (5) following a specified direction forming an angle (α) with the optical axis (2) of the reflector (1), and **in that** the collar (6) is disposed in the top portion of the reflector (1) or in the bottom portion of the reflector (1).

2. Optical module according to claim 1, **characterized in that** each face (7a) has a surface, the profile of which by a plane parallel to the optical axis and passing via the centre of the face and the centre of the city lamp (5) is a parabolic arc, the focus (F7) of which is situated in the vicinity of the centre of the city lamp (5), the Y-Y axis of the parabola being inclined following said specified direction.

3. Optical module according to claim 2, **characterized in that** the surface of each face (7a) is that of a torus having said parabola for support.

4. Optical module according to any one of the preceding claims, **characterized in that** the angle of inclination (α) of the specified direction, relative to the optical axis, is at least 5°, in particular between 5 and 20° or between 8 and 15°.

5. Optical module according to any one of the preceding claims, **characterized in that** the collar (6) comprises at least ten faces (7a) arranged contiguously in successive discontinuities of alignment.

6. Optical module according to any one of the preceding claims, **characterized in that** the collar (6) and the reflector (1) form a single solid part or **in that** the collar (6) is joined onto the reflector (1).

7. Optical module according to any one of the preceding claims providing a principal cut-off beam, in particular a side-light or fog-light beam, or without cut-off, in particular a main beam.

8. Optical module according to any one of the preceding claims, **characterized in that** the or each reflection face (7a) is predicted and oriented for reflecting a part of the luminous flow emitted by the secondary lamp, in particular the city lamp (5), following a direction rising or falling relative to horizontal.

9. Headlamp with an optical module according to any one of the preceding claims.

## Patentansprüche

1. Kraftfahrzeug-Optikmodul mit einem eine optische Achse (2) aufweisenden Reflektor (1), einer in der Nähe des Brennpunkts (F1) des Reflektors (1) angeordneten Hauptlichtquelle, wobei der Reflektor (1) mit Hilfe der Hauptlichtquelle zum Bilden eines Hauptlichtbündels vorgesehen ist, und einer Positionslichtquelle (5), die unter der durch die optische Achse (2) verlaufenden Horizontalebene liegt, **dadurch gekennzeichnet, dass** es einen Kragen (6) aufweist, der wenigstens eine Reflexionsfacette, insbesondere Reflexionsfacetten (7a) aufweist, wobei die oder wenigstens eine der Reflexionsfacetten, insbesondere jede Reflexionsfacette (7a), dazu vorgesehen und so ausgerichtet ist, einen Teil des von der Positionslichtquelle (5) abgegebenen Lichtstroms in eine bevorzugte Richtung zu reflektieren, die mit der optischen Achse (2) des Reflektors (1) einen Winkel (α) bildet, und dass der Kragen (6) im oberen Teil des Reflektors (1) oder im unteren Teil des Reflektors (1) angeordnet ist.

2. Optikmodul nach Anspruch 1,
**dadurch gekennzeichnet, dass** jede Facette (7a) eine Fläche aufweist, deren Querschnitt durch eine zur optischen Achse parallele und durch den Mittelpunkt der Facette und den Mittelpunkt der Positionslichtquelle (5) verlaufende Ebene ein Parabelbogen ist, dessen Brennpunkt (F7) in der Nähe des Mittelpunkts des Positionslichtquelle (5) liegt, wobei die Achse (Y-Y) der Parabel in der bevorzugten Richtung geneigt ist.

3. Optikmodul nach Anspruch 2,
**dadurch gekennzeichnet, dass** die Fläche jeder Facette (7a) die einer von der Parabel getragenen Ringfläche ist.

4. Optikmodul nach einem der vorhergehenden Ansprüche,
**dadurch gekennzeichnet, dass** der Neigungswinkel (α) der bevorzugten Richtung bezüglich der optischen Achse wenigstens 5°, insbesondere zwischen 5° und 20° oder zwischen 8° und 15° beträgt.

5. Optikmodul nach einem der vorhergehenden Ansprüche,
**dadurch gekennzeichnet, dass** der Kragen (6) wenigstens etwa zehn Facetten (7a) aufweist, die aneinandergrenzend sukzessiv zurückspringend angeordnet sind.

6. Optikmodul nach einem der vorhergehenden Ansprüche,
**dadurch gekennzeichnet, dass** der Kragen (6) und der Reflektor (1) ein einstückiges Teil bilden oder dass der Kragen (6) auf den Reflektor (1) aufgesetzt ist.

7. Optikmodul nach einem der vorhergehenden Ansprüche, das ein Hauptlichtbündel mit Hell-Dunkel-Grenze, insbesondere ein Abblendlicht oder ein Nebellicht, oder ohne Hell-Dunkel-Grenze, insbesondere ein Fernlicht, bildet.

8. Optikmodul nach einem der vorhergehenden Ansprüche,
**dadurch gekennzeichnet, dass** die oder jede Reflexionsfacette (7a) dazu vorgesehen und so ausgerichtet ist, einen Teil des von der Nebenlichtquelle, insbesondere der Positionslichtquelle (5), abgegebenen Lichtstroms in eine bezüglich der Horizontalen ansteigende oder abfallende Richtung zu reflektieren.

9. Scheinwerfer mit einem Optikmodul nach einem der vorhergehenden Ansprüche.
